# EUROPEAN PATENT APPLICATION

(11) **EP 4 534 450 A1**
(43) Date of publication of application: **09.04.2025**
(21) Application number: 23201962.0
(22) Date of filing: 05.10.2023
(51) Int. Cl.: B65G 1/04, B65G 47/51, B65G 47/53, B65G 1/137, B65G 1/06, B65G 1/127

(54) **SYSTEM FOR AND METHOD OF COMMISSIONING GOODS**

(71) Applicant: Hochschule für angewandte Wissenschaften Landshut, in Vertretung des Freistaates Bayern, 84036 Landshut (DE)
(72) Inventor: Ettengruber, Tobias, 94436 Simbach (DE); Schneider, Markus, 84036 Landshut (DE)
(74) Representative: Koplin, Moritz

(57) **Abstract**

Provided is a method of, and a system for, commissioning goods. The system comprises a first lane, a second lane which abuts the first lane, a third lane which is arranged below the first lane, a fourth lane which is arranged below the second lane and which abuts the third lane, a first conveyor, a second conveyor, a third conveyor, a first buffer, and a second buffer, wherein the first lane is configured to dispense first goods onto the first conveyor, wherein the second lane is configured to dispense second goods onto the first conveyor, wherein the third lane is configured to dispense third goods onto the second conveyor, wherein the fourth lane is configured to dispense fourth goods onto the second conveyor, wherein the first conveyor is configured to transport the goods dispensed onto the first conveyor towards the first buffer, wherein the second conveyor is configured to transport the goods dispensed onto the second conveyor towards the second buffer, wherein the first buffer and the second buffer are configured to release said goods onto the third conveyor, wherein the first buffer and the second buffer are enabled to individually release each of said goods onto the third conveyor.

## Description

### FIELD

The present disclosure relates to a system for, and a method of, commissioning goods. In particular, the present disclosure relates to commissioning goods by connecting a horizontal conveyor stage and a vertical conveyor stage by a buffer stage.

### BACKGROUND

US 4,527,937 to Tomasello et al relates to a storage and distribution system, wherein product elements are segregated into product lanes that are arranged in vertically stacked product levels with each product lane having a particular type of product element contained therein. The product lanes in each product level are capable of dispensing product elements onto a main conveyor assigned to the product level. The product elements dispensed onto the main conveyors are then consolidated by a merging system and directed onto an output conveyor which transports the consolidated order to a shipping, holding, or other suitable area. The merge system comprises a series of laterally spaced metering belts with one metering belt per product level. The metering belts have their input ends at the various product levels and their output ends at a single consolidation level.

A metering electric eye is disposed at the output end of each metering belt. These metering electric eyes are designed to sense the presence of a product element at the output end of the metering belt due to the product element interrupting the light beam associated with the metering electric eye. As the product elements from the various product levels converge toward the merging system, one of the metering belts will have its associated metering electronic eye tripped before the metering electronic eyes of the other metering belts. When it is sensed that one metering belt is ready to begin discharging product elements onto the consolidation level before the other merging belts, the movement of that first metering belt is continued while the operation of the other metering belts is halted.

### SUMMARY

The present invention is directed at a system for, and a method of, commissioning goods.

A system according to the present invention comprises a first lane, a second lane which abuts the first lane, a third lane which is arranged below the first lane, a fourth lane which is arranged below the second lane and which abuts the third lane, a first conveyor, a second conveyor, a third conveyor, a first buffer, and a second buffer, wherein the first lane is configured to dispense first goods onto the first conveyor, wherein the second lane is configured to dispense second goods onto the first conveyor, wherein the third lane is configured to dispense third goods onto the second conveyor, wherein the fourth lane is configured to dispense fourth goods onto the second conveyor, wherein the first conveyor is configured to transport the goods dispensed onto the first conveyor towards the first buffer, wherein the second conveyor is configured to transport the goods dispensed onto the second conveyor towards the second buffer, wherein the first buffer and the second buffer are configured to release said goods onto the third conveyor, wherein the first buffer and the second buffer are enabled to individually release each of said goods onto the third conveyor.

In this regard, the term "lane", as used throughout the description and the claims, particularly refers to one of multiple conveyors which extend side by side along a common path. For example, if a lane has a straight section, the abutting lane(s) may also have a straight section. The straight sections may have parallel longitudinal axes. For example, the first lane and the second lane, and the third lane and the fourth lane, respectively, may be formed by (identical) straight gravity conveyors which are horizontally displaced. The first lane, the second lane, the third lane, and the fourth lane may be arranged in a two-dimensional array of lanes where the third lane and the fourth lane are (only) vertically displaced relative to the first lane and the second lane, respectively, and wherein the second lane and the fourth lane are (only) horizontally displaced relative to the first lane and the third lane, respectively.

Each lane may hold a supply of identical goods. The system may be configured to replenish the supply of goods in each lane before a lane becomes empty. For example, a replenishing action may be triggered when the number of goods in a lane approaches, reaches, or falls below a threshold. Alternatively, two or more lanes may hold identical goods such that an empty lane may be compensated by dispensing goods from the remaining (non-empty) lanes. In this case, a replenishing action may be triggered by the number of goods in said lanes approaching, reaching, or falling below a threshold. The system may be configured to replenish the supply of goods in the lanes sequentially. For example, a replenishing conveyer may be configured to transport goods to different lanes in turn by positioning an output of the replenishing conveyor at an input of a lane, replenishing the supply of goods in the lane, and, once the supply has been replenished, positioning the output of the replenishing conveyor at an input of another lane.

Moreover, the formulation that "a lane abuts another lane", as used throughout the description and the claims, particularly refers to two lanes that are separated by a common structure or not separated at all. Notably, even if there is no (lateral) physical barrier between goods on abutting lanes, the system may be configured to guide the goods on the lanes in a way to maintain their lateral position such that the goods on a lane may not engage with goods on the abutting lane, allowing the lanes to be operated independently. Furthermore, the formulation that "a lane is arranged above another lane", as used throughout the description and the claims, particularly refers to lanes which are arranged at different vertical levels when seen in the horizontal direction. Moreover, the lanes may at least partially overlap when seen in the vertical direction. For example, the first lane and the third lane may overlap by 50% or 100% when seen in the vertical direction.

In addition, the term "conveyor", as used throughout the description and the claims, particularly refers to an arrangement for transporting goods along a path along which the conveyor extends. For example, the conveyor may have a belt on which the goods are placed, or the conveyor may have rollers which support the goods as they travel along the path. The conveyor may be a gravity conveyor or a powered conveyor. Notably, a powered conveyor may be enabled to move goods bidirectionally. For example, the first conveyor and the second conveyor may use bidirectional motion to achieve a particular order of the goods transported by those conveyors. However, a particular order of the goods on the first conveyor or the second conveyor may also be achieved by timing the dispensing of goods while the conveyors move in only one direction. For example, if the first conveyor is configured to move goods in only one direction and the output of the first lane is downstream of the output of the second lane, a second good dispensed by the second lane may be placed before a first good dispensed by the first lane by dispensing the second good, transporting the second good past the output of the first lane, and then dispensing the first good.

Furthermore, the term "buffer", as used throughout the description and the claims, particularly refers to a platform or a conveyor which is enabled to keep leading goods in the buffer while one or more trailing goods are stored in the buffer and to release one or more leading goods from the buffer while no further goods are stored in the buffer. In other words, a buffer may serve to decrease an operational interdependence of conveyors upstream and downstream of the buffer. In particular, a buffer may facilitate the continuous and steady operation of a conveyor downstream of the buffer while allowing the conveyor upstream of the buffer to operate unsteady and discontinuously. Likewise, a buffer may facilitate the continuous and steady operation of a conveyor upstream of the buffer while allowing the conveyor downstream of the buffer to operate unsteady and discontinuously.

Moreover, the term "to dispense", as used throughout the description and the claims, particularly refers to the act of deliberately releasing a single good from a lane such that the good is placed on a conveyor arranged at the output of the lane. For example, when a good is dispensed by a lane, the good may slide onto a conveyor which extends perpendicularly to the lane and transports the good away from the output such that another good may be dispensed from the same lane onto the conveyor. To this end, a lane which is formed by a gravity conveyor may be provided with a release mechanism which is based on withdrawing an element that blocks a leading good's movement towards the conveyor such that when the element is withdrawn, gravity urges the good onto the conveyor with the release mechanism blocking the next good on the lane from being inadvertently dispensed onto the conveyor.

Furthermore, the term "to release", as used throughout the description and the claims, particularly refers to the act of allowing a good held at an output to continue on its path downstream the system. For example, when a good is released by a buffer, the good may slide onto a conveyor which transports the good away from the output of the buffer such that another good may be released from the same buffer onto the conveyor. To this end, a buffer which is formed by a gravity conveyor may be provided with a release mechanism which is based on withdrawing an element that blocks a leading good's movement towards the conveyor such that when the element is withdrawn, gravity urges the good onto the conveyor with the release mechanism blocking the next good in the buffer from being inadvertently released onto the conveyor. A buffer which is formed by a powered conveyor may be activated to transport the leading good in the buffer to a downstream conveyor and deactivated before the next good is released onto the downstream conveyor.

As the buffers are enabled to individually release the goods stored in the buffer, the goods can be interleaved on the conveyor onto which the goods are released. In other words, a first good released by the first buffer may be followed by a fourth good released by the second buffer and the fourth good released by the second buffer may be followed by a second good released by the first buffer. This way, vertical stacking of lanes does not affect the order in which goods can be transported on the conveyor downstream of the buffers.

The first buffer may be arranged above the second buffer. The first buffer and the second buffer may be identical. The first buffer and the second buffer may fully overlap when seen in the vertical direction.

The first buffer may be a fourth conveyor, wherein the first conveyor, the third conveyor, and the fourth conveyor are configured to operate independently, and/or the second buffer may be a fifth conveyor, wherein the second conveyor, the third conveyor, and the fifth conveyor are configured to operate independently.

Although the conveyors may be configured to operate independently, their operation may be coordinated. For instance, if one of the buffers is full, the conveyor upstream the buffer may be halted. Likewise, if the conveyor upstream is halted, the lanes upstream the conveyor may be halted. If there is space available in a buffer, the conveyor upstream the buffer may be activated to fill this space. Likewise, if the conveyor upstream is activated, the lanes upstream the conveyor may be activated.

The first conveyor and the first buffer may be configured to operate in concert, and independently of the second conveyor and the second buffer.

The system may further comprise a controller, wherein the controller is configured to receive a first data set identifying one or more of the first goods, one or more of the second goods, one or more of the third goods, one or more of the fourth goods, and a first transport order of said goods, and wherein the controller is further configured to control when the first buffer and the second buffer individually release said one or more of the first goods, one or more of the second goods, one or more of the third goods, and one or more of the fourth goods onto the third conveyor in accordance with the first transport order.

The first transport order may reflect requirements imposed by further transporting and/or packaging/shipping. For example, the goods may differ in size and/or weight and the first transport order may assign leading positions to the larger and/or heavier goods to facilitate stacking the goods on one another. Alternatively, the first transport order may reflect the desire or need to access the goods in a particular order. More generally, the first transport order may be an order in which the goods to which the first transport order relates are to be output by the third conveyor.

The controller may be configured to control an operation of the first conveyor, when the first lane dispenses said one or more of the first goods onto the first conveyor, and when the second lane dispenses said one or more of the second goods onto the first conveyor, in accordance with the first transport order as it relates to said one or more of the first goods and said one or more of the second goods, and an operation of the second conveyor, when the third lane dispenses said one or more of the third goods onto the second conveyor, and when the fourth lane dispenses said one or more of the fourth goods onto the second conveyor, in accordance with the first transport order as it relates to said one or more of the third goods and said one or more of the fourth goods.

Accordingly, in order to establish the first transport order on the conveyor downstream of the buffers, the goods in the buffers do not have to be reordered. Rather, the goods in the buffers only have to be interleaved to establish the first transport order.

The controller may be further configured to receive a second data set identifying one or more of the first goods, one or more of the second goods, one or more of the third goods, one or more of the fourth goods, and a second transport order of said goods, wherein the second transport order differs from the first transport order.

Although not random, the data sets may not follow a particular pattern that would allow the controller to predict the type of the goods and/or transport order identified by consecutive data sets.

The controller may be further configured to control when the first buffer and the second buffer individually release said one or more of the first goods, one or more of the second goods, one or more of the third goods, and one or more of the fourth goods onto the third conveyor in accordance with the second transport order.

If the output of the second buffer is downstream of the output of the first buffer, the first buffer may start releasing goods identified by the second data set while the second buffer releases goods identified by the first data set.

The second transport order may reflect requirements imposed by further transporting and/or packaging/shipping. As indicated above, the goods may differ in size and/or weight and the second transport order may assign leading positions to the larger and/or heavier goods to facilitate stacking the goods on one another. Alternatively, the second transport order may reflect the desire or need to access the goods in a particular order. More generally, the second transport order may be an order in which the goods to which the second transport order relates are to be output by the third conveyor.

The controller may be configured to control the operation of the first conveyor, when the first lane dispenses said one or more of the first goods onto the first conveyor, and when the second lane dispenses said one or more of the second goods onto the first conveyor, in accordance with the second transport order as it relates to said one or more of the first goods and said one or more of the second goods, and the operation of the second conveyor, when the third lane dispenses said one or more of the third goods onto the second conveyor, and when the fourth lane dispenses said one or more of the fourth goods onto the second conveyor, in accordance with the second transport order as it relates to said one or more of the third goods and said one or more of the fourth goods.

Accordingly, in order to establish the second transport order on the conveyor downstream of the buffers, the goods in the buffers do not have to be reordered. Rather, the goods in the buffers only have to be interleaved to establish the second transport order.

The controller may be configured to control the operation of the first conveyor, when the first lane dispenses said one or more of the first goods onto the first conveyor, and when the second lane dispenses said one or more of the second goods onto the first conveyor, in accordance with the second transport order as it relates to said one or more of the first goods and said one or more of the second goods as soon as the second data set is available and there is free space in the first buffer, and the operation of the second conveyor, when the third lane dispenses said one or more of the third goods onto the second conveyor, and when the fourth lane dispenses said one or more of the fourth goods onto the second conveyor, in accordance with the second transport order as it relates to said one or more of the third goods and said one or more of the fourth goods as soon as the second data set is available and there is free space in the second buffer.

Thus, instead of waiting until all goods identified by the first data set have been stored in or passed the buffers, the system may start to process the next request as soon as the goods relating to the first data set have been transported by the first or second conveyor past the lanes involved in fulfilling the next request. If there is no need to maintain consecutive requests separate on the first and second conveyor because, for example, separation will be effectuated at a later stage, the system may start to process the next request instantly, thereby effectively interleaving the goods of consecutive requests.

A method according to the present invention comprises arranging the goods in a two-dimensional array of lanes, wherein each lane holds a replenishable supply of identical ones of said goods, dispensing the goods onto vertically stacked horizontal conveyors, wherein each horizontal conveyor is assigned to, and cooperates with, a row of the two-dimensional array, holding the dispensed goods in vertically stacked buffers, wherein each buffer is assigned to one of said horizontal conveyors, and individually releasing the goods held in the vertically stacked buffers onto a vertical conveyor which extends along the vertically stacked buffers and consolidates the released goods, in accordance with an order in which said goods are to be output by the vertical conveyor.

The method may further comprise processing a series of requests by assigning goods in each request to the rows holding the goods and individually operating each of the horizontal conveyors to establish a relative order between the goods dispensed on the horizontal conveyor in accordance with the request, monitoring, for each of said buffers, a free capacity of the buffer, and halting an operation of one of the horizontal conveyors if the assigned buffer is full.

The method may further comprise restarting an operation of one of the horizontal conveyors once the assigned buffer has sufficient free capacity.

The operation may be restarted even if another one of the horizontal conveyors is still busy processing an earlier request.

Due to the buffers, the individual rows and the assigned horizontal conveyors may be operated independently.

The method may further comprise deliberately changing an order in which requests are processed to reduce a time span during which a first one of the horizontal conveyors is anticipated to commence processing an upcoming request and a last one of the horizontal conveyors is anticipated to finish processing the upcoming request.

This may reduce the number of requests that the system fulfills at any given moment and thus facilitate reordering or cancelling the fulfillment of requests.

Notably, the features of the system may be features of the method and vice versa.

### BRIEF DESCRIPTION OF THE DRAWINGS

The foregoing aspects and many of the attendant advantages will become more readily appreciated as the same become better understood by reference to the following description of embodiments, when taken in conjunction with the accompanying drawings, wherein like reference numerals refer to like parts throughout the various views, unless otherwise specified.
Fig. 1 schematically illustrates a top view of four lanes, a horizontal conveyor, and a buffer according to a first example.
Fig. 2 schematically illustrates a top view of four lanes, a horizontal conveyor, and a buffer according to a second example.
Fig. 3 schematically illustrates a top view of a system for commissioning goods which includes the elements shown in Fig. 1.
Fig. 4 schematically illustrates a top view of a system for commissioning goods which includes the elements shown in Fig. 2.
Fig. 5 schematically illustrates a front view of the systems shown in Fig. 3 and Fig. 4.
Fig. 6a and Fig. 6b illustrate a first example of a vertical conveyor which may be used in the system shown in Fig. 2, Fig. 3, and Fig. 4.
Fig. 7a, Fig. 7b, and Fig. 7c illustrate a second example of a vertical conveyor which may be used in the systems shown in Fig. 2, Fig. 3, and Fig. 4.
Fig. 8 shows a flow-chart of a method of commissioning goods.

Notably, the drawings are not drawn to scale and unless otherwise indicated, they are merely intended to conceptually illustrate the structures and procedures described herein.

### DESCRIPTION OF EMBODIMENTS

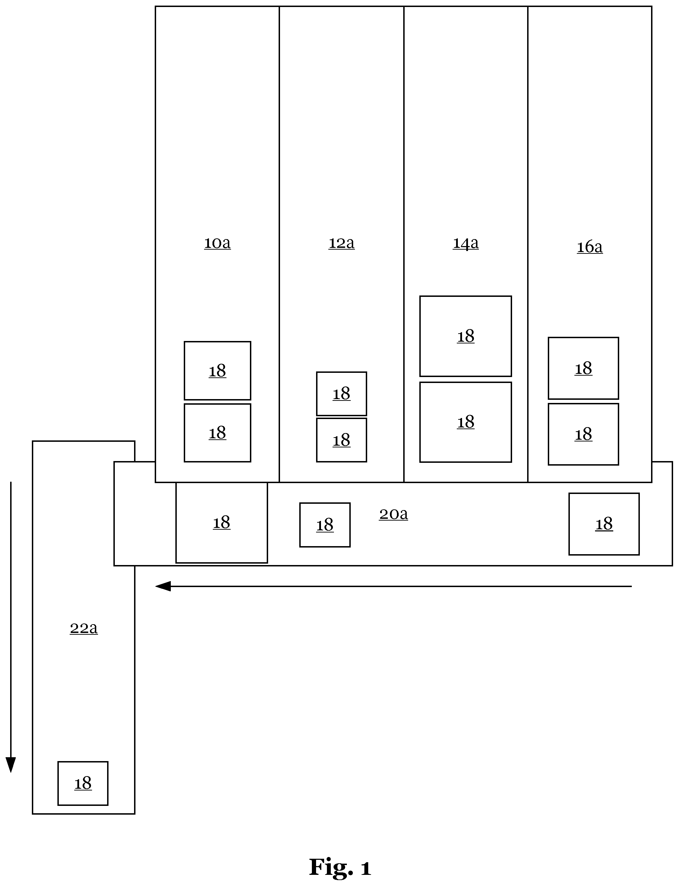

Fig. 1 shows multiple lanes 10a, 12a, 14a, and 16a which are arranged side by side in a horizontal row including a first lane 10a and a second lane 12a which abuts the first lane 10a. Each lane 10a, 12a, 14a, and 16a in the row holds a different type of goods 18 and is configured to individually dispense the goods 18 onto a horizontal conveyor 20a. The conveyor 20a extends perpendicular to the lanes 10a, 12a, 14a, and 16a along the lanes' outputs and transports the goods 18 dispensed onto the conveyor 20a towards a buffer 22a. The buffer 22a holds the goods 18 received from the conveyor 20a until it releases the goods 18 onto another conveyor 28 (not shown in Fig. 1). The order in which the goods 18 are released from the buffer 22a is the same as the order in which the goods 18 have been stored in the buffer 22a (first in first out, FIFO).

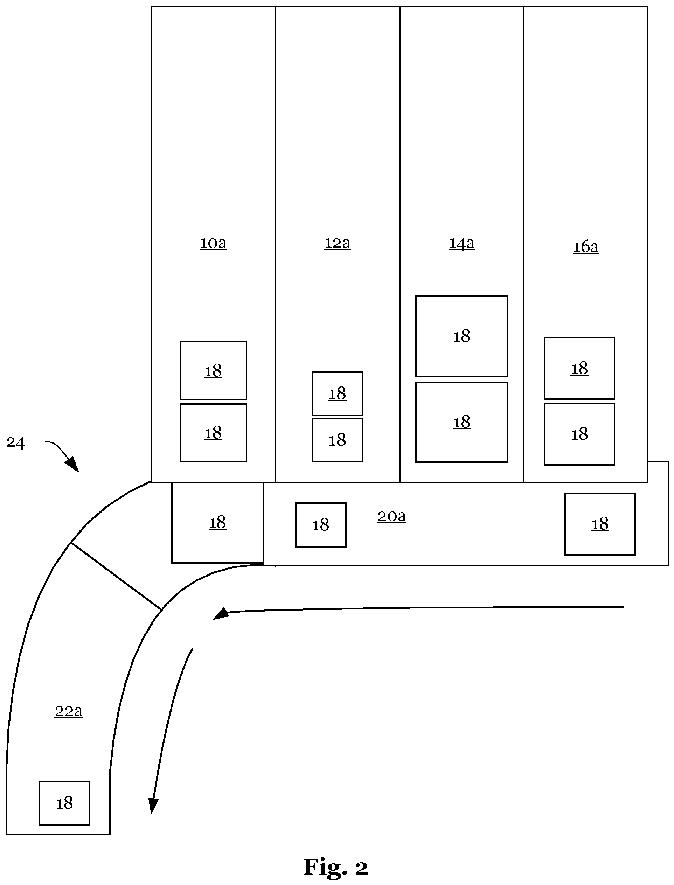

To establish a particular order, the goods 18 are sequentially dispensed onto the conveyor 20a. For example, a good 18 held by lane 14a may be transported to the buffer 20a before a good 18 held by lane 12a is transported to the buffer 20a by having lane 14a dispense a good 18 onto the conveyor 20a, the conveyor 20a may transport the good 18 past the output of lane 12a, and lane 12a subsequently may dispense a good 18 onto the conveyor 20a. As shown in Fig. 1, the transition from the conveyor 20a to the buffer 22a may involve a vertical movement and/or a sudden change in the horizontal transport direction at the output of the conveyor 20a. However, as shown in Fig. 2, the transition may involve neither of those as there may be a seamless transition between the conveyor 20a and the buffer 22a. For example, the conveyor 20a and the buffer 22a may be sections of a single conveying structure 24.

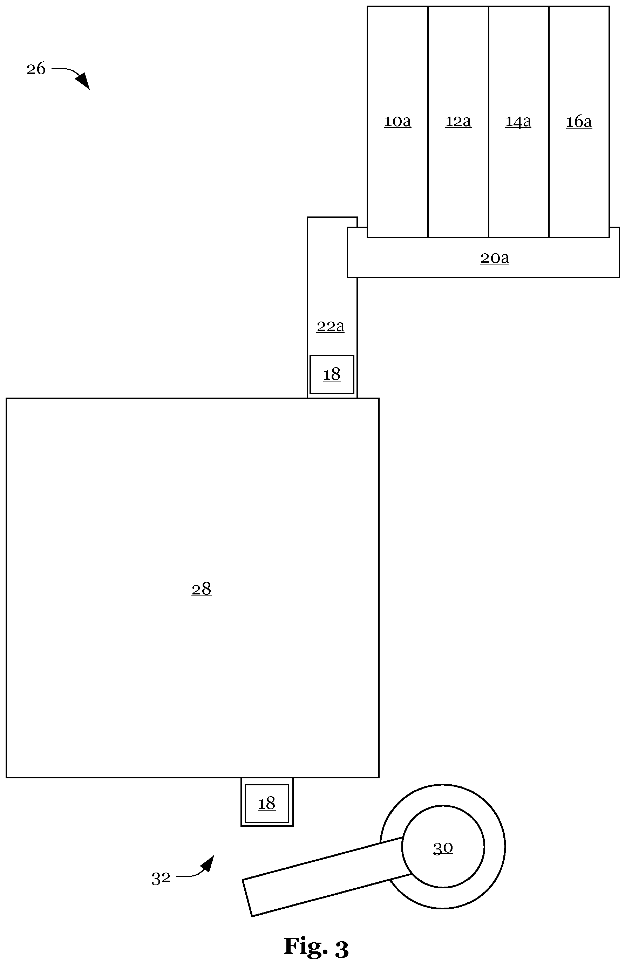

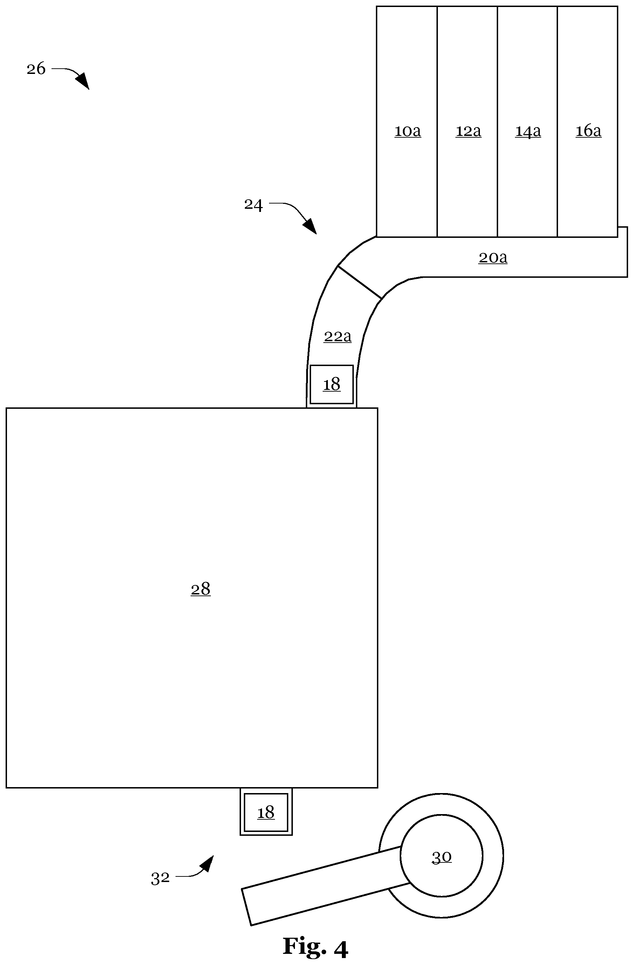

Fig. 3 and Fig. 4 schematically illustrate top views of systems 26 for commissioning the goods 18 which include the elements shown in Fig. 1 and Fig. 2, respectively. The systems 26 comprise a vertical conveyor 28 onto which goods 18 are released by the buffer 22a and a robot 30 which picks up the goods 18 that arrive at the output 32 of the vertical conveyor 28. For example, the robot 30 may be configured to stack goods 18 (relating to one or more requests) on one or more pallets (not shown) or load goods 18 (relating to one or more requests) onto one or more transport devices (not shown). Notably, the robot 30 is merely one example as to how the goods 18 that arrive at the output 32 of the vertical conveyor 28 may be further processed. For example, the goods 18 (relating to one or more requests) may also be manually stacked on a pallet, automatically processed by a packing system, or put onto another conveyor which may transport the goods 18 from the output 32 towards their destination.

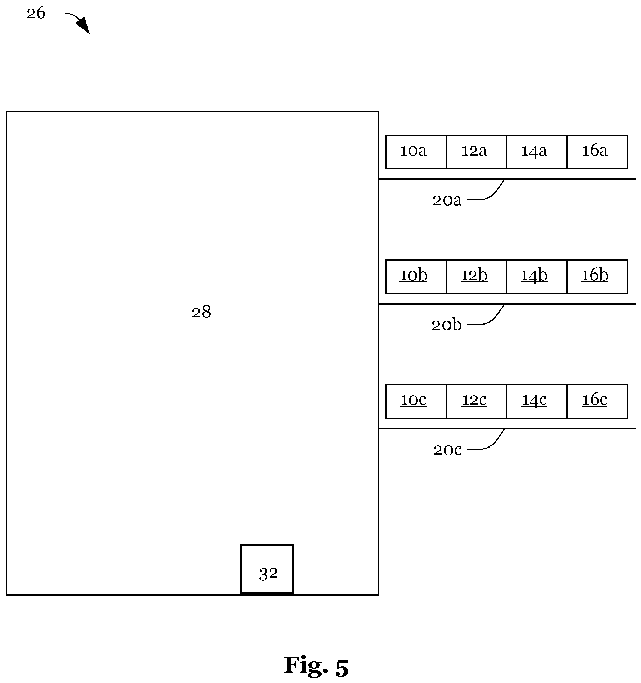

As shown in Fig. 5, the system 26 comprises multiple vertically stacked rows of lanes 10a, 12a, 14a, 16a, 10b, 12b, 14b, 16b, 10c, 12c, 14c, and 16c which form a two-dimensional array of lanes 10a, 12a, 14a, 16a, 10b, 12b, 14b, 16b, 10c, 12c, 14c, and 16c. The lanes 10a, 12a, 14a, 16a, 10b, 12b, 14b, 16b, 10c, 12c, 14c, and 16c in each row dispense the goods 18 held by the respective lane 10a, 12a, 14a, 16a, 10b, 12b, 14b, 16b, 10c, 12c, 14c, and 16c onto one of multiple vertically stacked conveyors 20a, 20b, and 20c. Each of the conveyors 20a, 20b, and 20c transports the goods 18 dispensed onto the conveyor 20a, 20b, and 20c towards a buffer 22a, 22b, and 22c, respectively (not shown in Fig. 5), as exemplarily illustrated in Fig. 1, Fig. 2, Fig. 3, and Fig. 4 with regard to conveyor 20a and buffer 22a.

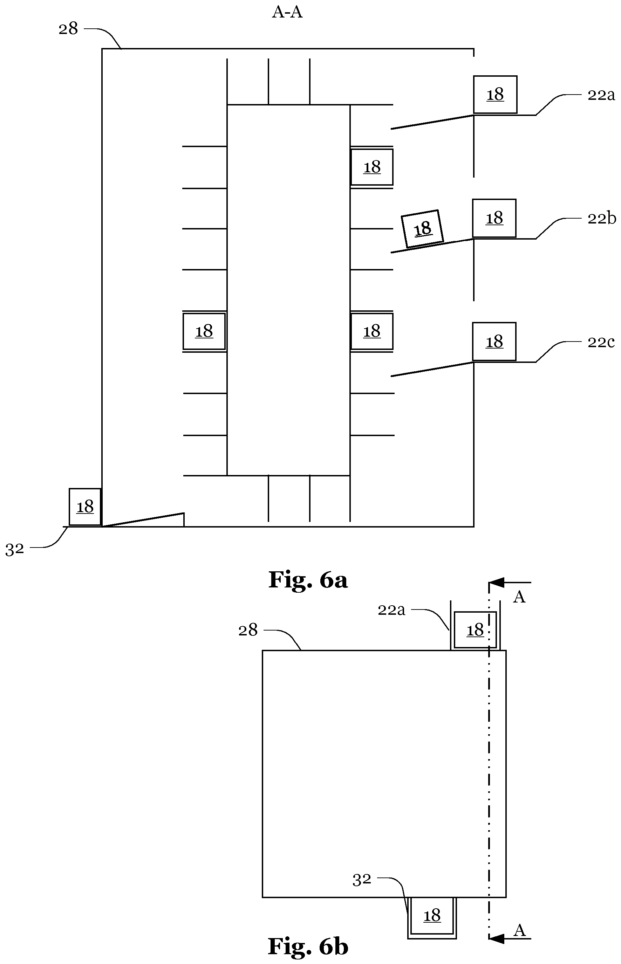

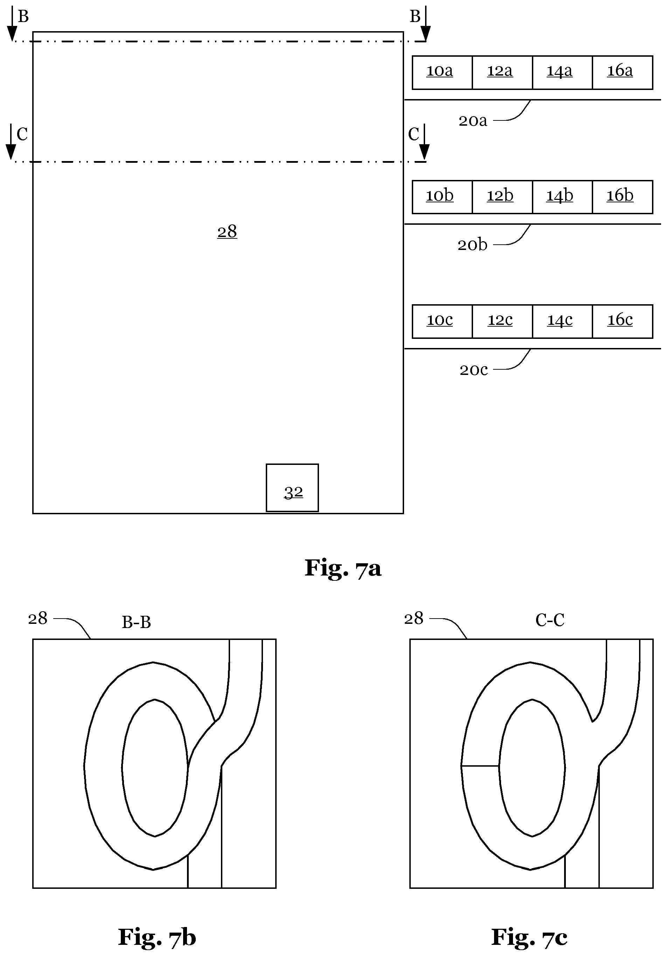

As illustrated by Fig. 6a and Fig. 6b, the goods 18 are then individually released by the buffers 22a, 22b, and 22c onto the vertical conveyor 28. The vertical conveyor 28 has multiple transport platforms which are moved past the outputs of the buffers 22a, 22b, and 22c and a released good 18 is placed on the next available transport platform. As illustrated by Fig. 7a, Fig. 7b, and Fig. 7c, the vertical conveyor 28 may be a steady conveyor 28 as opposed to an unsteady conveyor 28 as illustrated in Fig. 6a and 6b. As shown in Fig. 7b and Fig. 7c, the vertical conveyor 28 may lead the goods 18 along a helical path in the vertical direction, wherein goods 18 are released onto the helical path at different points along which the helical path extends. As shown in Fig. 7b and Fig. 7c, the points may lie on a vertical straight line.

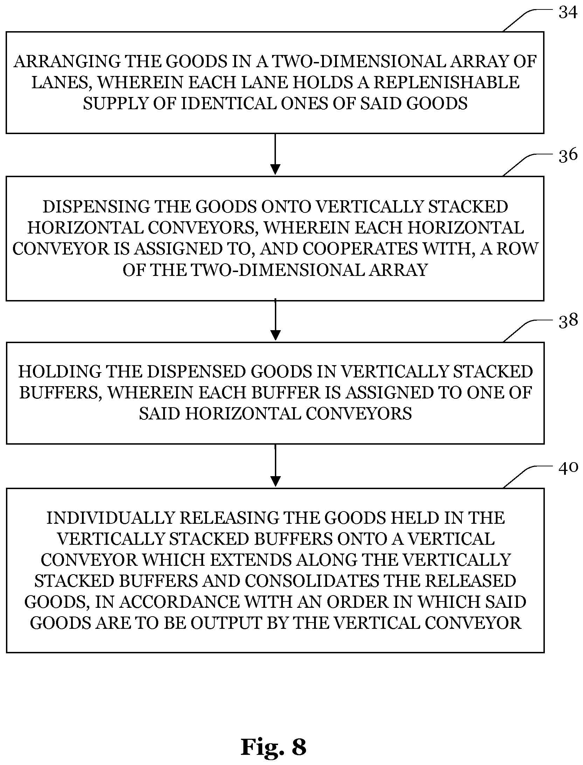

Fig. 8 shows a flow-chart of a method of commissioning goods. The method starts at step 34 with arranging the goods 18 in a two-dimensional array of lanes 10a, 12a, 14a, 16a, 10b, 12b, 14b, 16b, 10c, 12c, 14c, and 16c wherein each lane 10a, 12a, 14a, 16a, 10b, 12b, 14b, 16b, 10c, 12c, 14c, and 16c holds a replenishable supply of identical ones of said goods 18. At step 36, the method is continued with dispensing the goods 18 onto vertically stacked horizontal conveyors 20a, 20b, and 20c, wherein each horizontal conveyor 20a, 20b, and 20c is assigned to, and cooperates with, a row of the two-dimensional array. At step 38, the method is continued with holding the dispensed goods 18 in vertically stacked buffers 22a, 22b, and 22c, wherein each buffer 22a, 22b, and 22c is assigned to one of said horizontal conveyors 20a, 20b, and 20c. The method ends at step 40 with individually releasing the goods 18 held in the vertically stacked buffers 22a, 22b, and 22c onto a vertical conveyor 28 which extends along the vertically stacked buffers 22a, 22b, and 22c and consolidates the released goods 18, in accordance with an order in which said goods 18 are to be output by the vertical conveyor 28.

### REFERENCE SIGNS LIST

- 10a: lane
- 12a: lane
- 14a: lane
- 16a: lane
- 10b: lane
- 12b: lane
- 14b: lane
- 16b: lane
- 10c: lane
- 12c: lane
- 14c: lane
- 16c: lane
- 18: good
- 20a: conveyor
- 20b: conveyor
- 20c: conveyor
- 22a: buffer
- 22b: buffer
- 22c: buffer
- 24: conveying structure
- 26: system
- 28: conveyor
- 30: robot
- 32: output
- 34: step
- 36: step
- 38: step
- 40: step

## Claims

1. A system (26) for commissioning goods (18), comprising:
a first lane (10a);
a second lane (12a) which abuts the first lane (10a);
a third lane (10b) which is arranged below the first lane (10a);
a fourth lane (12b) which is arranged below the second lane (12a) and which abuts the third lane (10b);
a first conveyor (20a);
a second conveyor (20b);
a third conveyor (28);
a first buffer (22a); and
a second buffer (22b);
wherein the first lane (10a) is configured to dispense first goods (18) onto the first conveyor (20a);
wherein the second lane (12a) is configured to dispense second goods (18) onto the first conveyor (20a);
wherein the third lane (10b) is configured to dispense third goods (18) onto the second conveyor (20b);
wherein the fourth lane (12b) is configured to dispense fourth goods (18) onto the second conveyor (20b);
wherein the first conveyor (20a) is configured to transport the goods (18) dispensed onto the first conveyor (20a) towards the first buffer (22a);
wherein the second conveyor (20b) is configured to transport the goods (18) dispensed onto the second conveyor (20b) towards the second buffer (22b);
wherein the first buffer (22a) and the second buffer (22b) are configured to release said goods (18) onto the third conveyor (28);
**characterized in that**
the first buffer (22a) and the second buffer (22b) are enabled to individually release each of said goods (18) onto the third conveyor (28).

2. The system (26) for commissioning goods (18) of claim 1, wherein the first buffer is arranged above the second buffer.

3. The system (26) for commissioning goods (18) of claim 1 or 2,
wherein the first conveyor (20a) and the first buffer (22a) are configured to operate in concert, and independently of the second conveyor (20b) and the second buffer (22b).

4. The system (26) for commissioning goods (18) of any one of claims 1 to 3, further comprising:
a controller;
wherein the controller is configured to receive a first data set identifying one or more of the first goods (18), one or more of the second goods (18), one or more of the third goods (18), one or more of the fourth goods (18), and a first transport order of said goods (18); and
wherein the controller is further configured to control when the first buffer (22a) and the second buffer (22b) individually release said one or more of the first goods (18), one or more of the second goods (18), one or more of the third goods (18), and one or more of the fourth goods (18) onto the third conveyor (28) in accordance with the first transport order.

5. The system (26) for commissioning goods (18) of claim 4, wherein the first transport order is an order in which the goods (18) to which the first transport order relates are to be output by the third conveyor (28).

6. The system (26) for commissioning goods (18) of claim 4 or 5, wherein the controller is configured to control:
an operation of the first conveyor (20a), when the first lane (10a) dispenses said one or more of the first goods (18) onto the first conveyor (20a), and when the second lane (12a) dispenses said one or more of the second goods (18) onto the first conveyor (20a), in accordance with the first transport order as it relates to said one or more of the first goods (18) and said one or more of the second goods (18); and
an operation of the second conveyor (20b), when the third lane (10b) dispenses said one or more of the third goods (18) onto the second conveyor (20b), and when the fourth lane (12b) dispenses said one or more of the fourth goods (18) onto the second conveyor (20b), in accordance with the first transport order as it relates to said one or more of the third goods (18) and said one or more of the fourth goods (18).

7. The system (26) for commissioning goods (18) of any one of claims 4 to 6,
wherein the controller is further configured to receive a second data set identifying one or more of the first goods (18), one or more of the second goods (18), one or more of the third goods (18), one or more of the fourth goods (18), and a second transport order of said goods (18), wherein the second transport order differs from the first transport order; and
wherein the controller is further configured to control when the first buffer (22a) and the second buffer (22b) individually release said one or more of the first goods (18), one or more of the second goods (18), one or more of the third goods (18), and one or more of the fourth goods (18) onto the third conveyor (28) in accordance with the second transport order.

8. The system (26) for commissioning goods (18) of claim 7, wherein the second transport order is an order in which the goods (18) to which the second transport order relates are to be output by the third conveyor (28).

9. The system (26) for commissioning goods (18) of claim 7 or 8, wherein the controller is configured to control:
the operation of the first conveyor (20a), when the first lane (10a) dispenses said one or more of the first goods (18) onto the first conveyor (20a), and when the second lane (12a) dispenses said one or more of the second goods (18) onto the first conveyor (20a), in accordance with the second transport order as it relates to said one or more of the first goods (18) and said one or more of the second goods (18); and
the operation of the second conveyor (20b), when the third lane (10b) dispenses said one or more of the third goods (18) onto the second conveyor (20b), and when the fourth lane (12b) dispenses said one or more of the fourth goods (18) onto the second conveyor (20b), in accordance with the second transport order as it relates to said one or more of the third goods (18) and said one or more of the fourth goods (18).

10. The system (26) for commissioning goods (18) of claim 9, wherein the controller is configured to control:
the operation of the first conveyor (20a), when the first lane (10a) dispenses said one or more of the first goods (18) onto the first conveyor (20a), and when the second lane (12a) dispenses said one or more of the second goods (18) onto the first conveyor (20a), in accordance with the second transport order as it relates to said one or more of the first goods (18) and said one or more of the second goods (18) as soon as the second data set is available and there is free space in the first buffer (22a); and
the operation of the second conveyor (20b), when the third lane (10b) dispenses said one or more of the third goods (18) onto the second conveyor (20b), and when the fourth lane (12b) dispenses said one or more of the fourth goods (18) onto the second conveyor (20b), in accordance with the second transport order as it relates to said one or more of the third goods (18) and said one or more of the fourth goods (18) as soon as the second data set is available and there is free space in the second buffer (22b).

11. A method of commissioning goods (18), comprising:
arranging (34) the goods (18) in a two-dimensional array of lanes (10a, 12a, 14a, 16a, 10b, 12b, 14b, 16b, 10c, 12c, 14c, 16c), wherein each lane (10a, 12a, 14a, 16a, 10b, 12b, 14b, 16b, 10c, 12c, 14c, 16c) holds a replenishable supply of identical ones of said goods (18);
dispensing (36) the goods (18) onto vertically stacked horizontal conveyors (20a, 20b, 20c), wherein each horizontal conveyor (20a, 20b, 20c) is assigned to, and cooperates with, a row of the two-dimensional array;
holding (38) the dispensed goods (18) in vertically stacked buffers (22a, 22b, 22c), wherein each buffer (22a, 22b, 22c) is assigned to one of said horizontal conveyors (20a, 20b, 20c); and
individually releasing (40) the goods (18) held in the vertically stacked buffers (22a, 22b, 22c) onto a vertical conveyor (28) which extends along the vertically stacked buffers (22a, 22b, 22c) and consolidates the released goods (18), in accordance with an order in which said goods (18) are to be output by the vertical conveyor (28).

12. The method of commissioning goods (18) of claim 11, further comprising:
processing a series of requests by assigning goods (18) in each request to the rows holding the goods (18) and individually operating each of the horizontal conveyors (20a, 20b, 20c) to establish a relative order between the goods (18) dispensed on the horizontal conveyor (20a, 20b, 20c) in accordance with the request;
monitoring, for each of said buffers (22a, 22b, 22c), a free capacity of the buffer (22a, 22b, 22c); and
halting an operation of one of the horizontal conveyors (20a, 20b, 20c) if the assigned buffer (22a, 22b, 22c) is full.

13. The method of commissioning goods (18) of claim 12, further comprising:
restarting an operation of one of the horizontal conveyors (20a, 20b, 20c) once the assigned buffer (22a, 22b, 22c) has sufficient free capacity.

14. The method of commissioning goods (18) of claim 13, wherein the operation is restarted even if another one of the horizontal conveyors (20a, 20b, 20c) is still busy processing an earlier request.

15. The method of commissioning goods (18) of claim 14, further comprising:
deliberately changing an order in which requests are processed to reduce a time span during which a first one of the horizontal conveyors (20a, 20b, 20c) is anticipated to commence processing an upcoming request and a last one of the horizontal conveyors (20a, 20b, 20c) is anticipated to finish processing the upcoming request.
